# EUROPEAN PATENT APPLICATION

(11) **EP 4 312 447 A1**
(43) Date of publication of application: **31.01.2024**
(21) Application number: 23185618.8
(22) Date of filing: 14.07.2023
(51) Int. Cl.: H04W 12/06, H04L 9/00, H04W 12/126, H04W 12/082, B25F 5/00, H02J 7/00, A01F 1/00, A01D 34/00

(54) **BLOCKCHAIN FOR AUTHENTICATION OF BATTERIES, ACCESSORIES, AND POWER TOOLS**

(30) Priority: 27.07.2022 US 202263392638 P
(71) Applicant: Techtronic Cordless GP, Anderson, SC 29621 (US)
(72) Inventor: LI, Shing Hin, Kwai Chung (CN)
(74) Representative: Zimmermann & Partner Patentanwälte mbB

(57) **Abstract**

A communication system may include a battery pack and a power tool. The power tool may be configured to obtain battery pack information from the battery pack, and transmit a validation request to a node of a blockchain network. The validation request may include the battery pack information and power tool information. The power tool may be configured to receive a blockchain authentication message from at least one node of the blockchain network. The blockchain authentication message may indicate whether the blockchain network validated the battery pack information and the power tool information. An electronic processor of the power tool may be configured to control an operation of the power tool based on the blockchain authentication message.

## Description

### RELATED APPLICATIONS

This application claims priority to U.S. Provisional Application No. 63/392,638, filed on July 27, 2022 (Attorney Docket No.: 206737-9058-US01), the entire contents of which are hereby incorporated by reference.

### FIELD

Embodiments described herein relate to blockchain for authentication of batteries, accessories, or power tools.

### SUMMARY

One embodiment includes a communication system that may include a battery pack including a third memory configured to store battery pack information. The communication system may further include a power tool including a first electronic processor, a first memory, and a first network interface. The first memory may be configured to store power tool information. The first electronic processor may be configured to obtain the battery pack information from the battery pack, and transmit, via the first network interface, the battery pack information and the power tool information to an external device. The first electronic processor may be further configured to receive, via the first network interface, an authentication notification from the external device, and control an operation of the power tool based on the authentication notification. The communication system may further include the external device including a second electronic processor, a second memory, and a second network interface. The second electronic processor may be configured to receive, via the second network interface, the battery pack information and the power tool information from the power tool. The second electronic processor may be further configured to transmit, via the second network interface, a validation request to a node of a blockchain network. The validation request may include the battery pack information and the power tool information. The second electronic processor may be further configured to receive, via the second network interface, a blockchain authentication message from at least one node of the blockchain network. The blockchain authentication message may indicate whether the blockchain network validated the battery pack information and the power tool information. The second electronic processor may be further configured to transmit, via the second network interface, the authentication notification to the power tool. The authentication notification may be based on the blockchain authentication message.

In addition to any combination of features described above, the blockchain authentication message may indicate that the blockchain network was unable to validate the battery pack information and the power tool information. In addition to any combination of features described above, the authentication notification may indicate that the battery pack information and the power tool information were not validated by the blockchain network. In addition to any combination of features described above, the first electronic processor of the power tool may be configured to control the operation of the power tool based on the authentication notification by at least one of allowing the power tool to operate in a restricted manner and preventing one or more components of the power tool from operating.

In addition to any combination of features described above, the blockchain authentication message may indicate that the blockchain network was able to validate the battery pack information and the power tool information. In addition to any combination of features described above, the authentication notification may indicate that the battery pack information and the power tool information were validated by the blockchain network. In addition to any combination of features described above, the first electronic processor of the power tool may be configured to control the operation of the power tool based on the authentication notification by allowing the power tool to operate in an unrestricted manner.

In addition to any combination of features described above, the battery pack information and the power tool information may be attempted to be validated by the blockchain network using a consensus mechanism of a plurality of nodes of the blockchain network.

In addition to any combination of features described above, attempting to validate the battery pack information and the power tool information may includes (i) executing, by at least one node of the blockchain network, a smart contract to compare a digital identification of the battery pack stored on a blockchain of the blockchain network to a digital identification of the power tool stored on the blockchain, and/or (ii) preventing the at least one node of the blockchain network from validating the battery pack information and the power tool information in response to determining that the digital identification of the battery pack and the digital identification of the power tool were not previously paired with each other.

In addition to any combination of features described above, the consensus mechanism may be at least one selected from a group consisting of Proof of Work, Proof of Stake, Proof of Capacity, Proof of Activity, Proof of Burn, or Proof of Time.

In addition to any combination of features described above, the external device may be configured to act as a node of the blockchain network.

In addition to any combination of features described above, the external device may be configured to act as a light node of the blockchain network with respect to the validation request that is transmitted by the external device. In addition to any combination of features described above, the external device may be configured to act as a full node of the blockchain network with respect to a second validation request transmitted by a different device than the external device.

In addition to any combination of features described above, the first electronic processor may be configured to control the operation of the power tool by controlling a current that is supplied to a motor of the power tool.

In addition to any combination of features described above, the power tool may include one of a robotic power tool and a hand-held power tool.

In addition to any combination of features described above, the battery pack information may include at least one of battery pack usage information, a battery pack identifier, and battery pack ownership information. In addition to any combination of features described above, the power tool information may include at least one of power tool usage information, a power tool identifier, power tool ownership information, and combinations thereof.

Another embodiment includes a method of controlling operation of a power tool. The method may include determining, by a first electronic processor of the power tool, that a battery pack has been coupled to the power tool. The method may include preventing, by the first electronic processor, one or more components of the power tool from operating. The method may include obtaining, by the first electronic processor, battery pack information stored in a memory of the battery pack from the battery pack. The method may include transmitting, via a first network interface of the power tool, the battery pack information and power tool information to an external device. The power tool information may be retrieved by the first electronic processor from a memory of the power tool. The method may include receiving, via a second network interface of the external device, the battery pack information and the power tool information from the power tool. The method may include transmitting, via the second network interface, a validation request to a node of a blockchain network. The validation request may include the battery pack information and the power tool information. The method may include receiving, via the second network interface, a blockchain authentication message from at least one node of the blockchain network. The blockchain authentication message may indicate whether the blockchain network validated the battery pack information and the power tool information. The method may include transmitting, via the second network interface, an authentication notification to the power tool based on the blockchain authentication message. The method may include receiving, via the first network interface, the authentication notification from the external device. The method may include controlling, with the first electronic processor, an operation of the power tool based on the authentication notification.

In addition to any combination of features described above, the blockchain authentication message may indicate that the blockchain network was unable to validate the battery pack information and the power tool information. In addition to any combination of features described above, the authentication notification may indicate that the battery pack information and the power tool information were not validated by the blockchain network. In addition to any combination of features described above, controlling the operation of the power tool based on the authentication notification may include at least one of allowing the power tool to operate in a restricted manner and continuing to prevent the one or more components of the power tool from operating.

In addition to any combination of features described above, the blockchain authentication message may indicate that the blockchain network was able to validate the battery pack information and the power tool information. In addition to any combination of features described above, the authentication notification may indicate that the battery pack information and the power tool information were validated by the blockchain network. In addition to any combination of features described above, controlling the operation of the power tool based on the authentication notification may include allowing the power tool to operate in an unrestricted manner by allowing the one or more components of the power tool to operate.

In addition to any combination of features described above, the battery pack information and the power tool information may be attempted to be validated by the blockchain network using a consensus mechanism of a plurality of nodes of the blockchain network.

In addition to any combination of features described above, controlling the operation of the power tool includes controlling a current that may be supplied to a motor of the power tool.

Another embodiment includes a communication system that may include a battery pack including a second electronic processor, a second memory configured to store battery pack information, and a second network interface. The communication system may also include a power tool including a first electronic processor, a first memory configured to store power tool information, and a first network interface. The first electronic processor may be configured to obtain the battery pack information from the battery pack, and transmit, via the first network interface, a validation request to a node of a blockchain network. The validation request may include the battery pack information and the power tool information. The first electronic processor may be configured to receive, via the first network interface, a blockchain authentication message from at least one node of the blockchain network. The blockchain authentication message may indicate whether the blockchain network validated the battery pack information and the power tool information. The first electronic processor may be configured to control an operation of the power tool based on the blockchain authentication message.

In addition to any combination of features described above, the second electronic processor of the battery pack may be configured to obtain the power tool information from the power tool, and transmit, via the second network interface, a second validation request to the node of the blockchain network, wherein the second validation request includes the battery pack information and the power tool information. In addition to any combination of features described above, the second electronic processor of the battery pack may be configured to receive, via the second network interface, a second blockchain authentication message from at least one node of the blockchain network. The second blockchain authentication message may indicate whether the blockchain network validated the battery pack information and the power tool information. In addition to any combination of features described above, the second electronic processor of the battery pack may be configured to control whether the battery pack provides current to the power tool over at least some terminals of the battery pack based on the blockchain authentication message.

In addition to any combination of features described above, the blockchain authentication message may indicate that the blockchain network was unable to validate the battery pack information and the power tool information. In addition to any combination of features described above, the first electronic processor of the power tool may be configured to control the operation of the power tool based on the blockchain authentication message by at least one of allowing the power tool to operate in a restricted manner and preventing one or more components of the power tool from operating.

In addition to any combination of features described above, the blockchain authentication message may indicate that the blockchain network was able to validate the battery pack information and the power tool information. In addition to any combination of features described above, the first electronic processor of the power tool may be configured to control the operation of the power tool based on the blockchain authentication message by allowing the power tool to operate in an unrestricted manner.

Other aspects, features, and embodiments will become apparent by consideration of the detailed description and accompanying drawings.

### BRIEF DESCRIPTION OF THE DRAWINGS

FIG. 1A illustrates a communication system including a power tool, such as a robotic garden tool, according to some example embodiments.
FIG. 1B illustrates a bottom perspective view of the power tool of FIG. 1A according to some example embodiments.
FIG. 2A is a block diagram of the power tool of FIGS. 1A and 1B according to some example embodiments.
FIG. 2B is a block diagram of a battery pack that may be removably attachable to the power tool of FIG. 2A according to some example embodiments.
FIG. 3 is a block diagram of the external device of FIG. 1A according to some example embodiments.
FIG. 4A is a block diagram of a node included in a blockchain network included in the communication system of FIG. 1, according to some example embodiments.
FIG. 4B illustrates a plurality of nodes that may be included in the blockchain network of FIG. 1 and their interconnections, according to some example embodiments.
FIG. 4C illustrates another plurality of nodes that may be included in the blockchain network of FIG. 1 and their interconnections, according to some example embodiments.
FIG. 4D illustrates yet another plurality of nodes that may be included in the blockchain network of FIG. 1 and their interconnections, according to some example embodiments.
FIGS. 5A-5B illustrates a flowchart of a method of authenticating a power tool attachment using blockchain technology, according to some example embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting, and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor," "central processing unit," and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

Throughout this application, the term "approximately" may be used to describe the dimensions of various components. In some situations, the term "approximately" means that the described dimension is within 1% of the stated value, within 5% of the stated value, within 10% of the stated value, or the like. When the term "and/or" is used in this application, it is intended to include any combination of the listed components. For example, if a component includes A and/or B, the component may include solely A, solely B, or A and B.

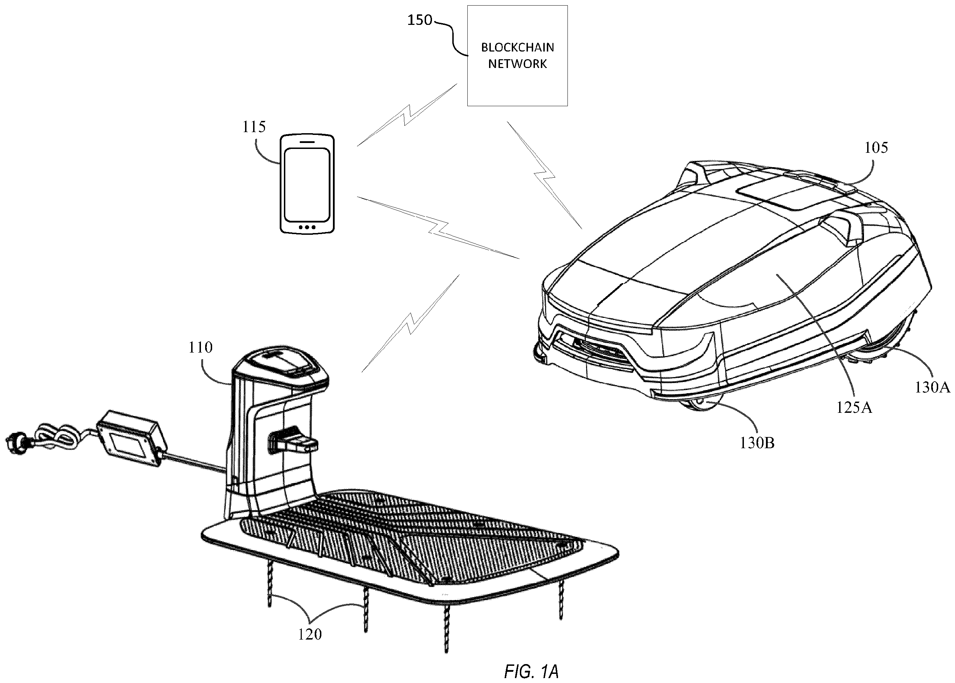

FIG. 1A illustrates a communication system 100 that may include a robotic garden tool 105 (e.g., a robotic lawn mower 105 that may also be referred to as a robotic mower 105), a docking station 110 for the robotic mower 105, an external device 115, and a blockchain network 150 according to some example embodiments. The robotic garden tool 105 is primarily described as being a robotic lawn mower 105. However, in other embodiments, the robotic garden tool 105 may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the robotic garden tool 105 may include a vacuum cleaner, a trimmer, a string trimmer, a hedge trimmer, a sweeper, a cutter, a plow, a blower, a snow blower, etc.

In some embodiments, a lawn may include any type of property that includes grass, a crop, some other material to be trimmed, cleared, gathered, etc., and/or that includes some material to receive treatment from the robotic garden tool 105 (e.g., fertilizer to treat grass in the lawn). In some embodiments, a lawn may include paved portions of a property (e.g., a driveway), for example, when the robotic garden tool 105 is used for snow plowing/removal.

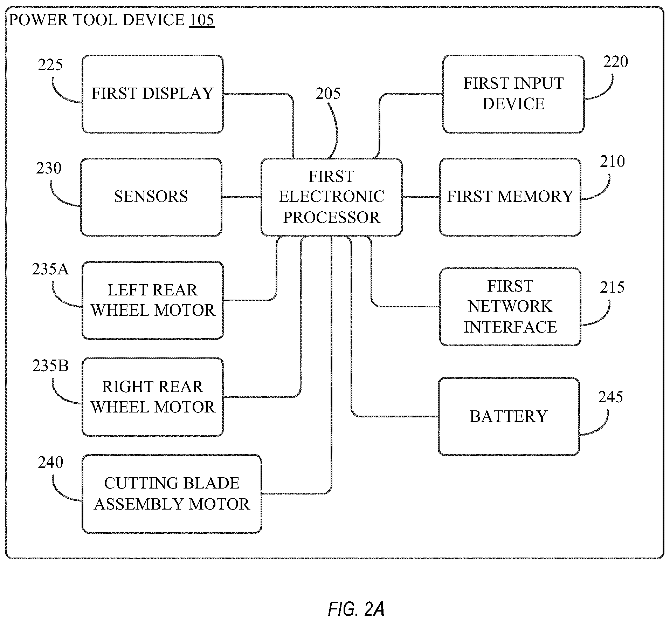

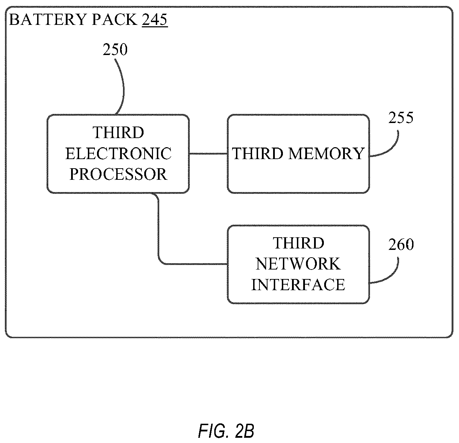

In some embodiments, the docking station 110 may be installed in a worksite using stakes 120. The power tool 105 may be configured to mow a yard and dock at the docking station 110 in order to charge a battery pack 245 of the power tool 105 (see FIGS. 2A and 2B). In some embodiments, the docking station 110 is configured to make an electrical connection with a power supply (e.g., via a cord and plug connected to a wall outlet that is connected to a power grid) in order to provide charging current to the power tool 105 when the power tool 105 is electrically coupled with the docking station 110. In some embodiments, the battery pack 245 is a removable, rechargeable battery pack configured to be charged at a charging device/charger while a second removable, rechargeable battery pack is used with the power tool 105.

In some embodiments, the power tool 105 is not a robotic tool and may be hand-held power tool 105 or other type of power tool 105. The power tool 105 may also be referred to as a power tool device 105. The power tool device 105 may be configured to perform one or more specific tasks (e.g., drilling, cutting, fastening, pressing, lubricant application, sanding, heating, grinding, bending, forming, impacting, polishing, lighting, etc.). For example, an impact wrench is associated with the task of generating a rotational output (e.g., to drive a bit), while a reciprocating saw is associated with the task of generating a reciprocating output motion (e.g., for pushing and pulling a saw blade). The task(s) associated with a particular tool may also be referred to as the primary function(s) of the tool.

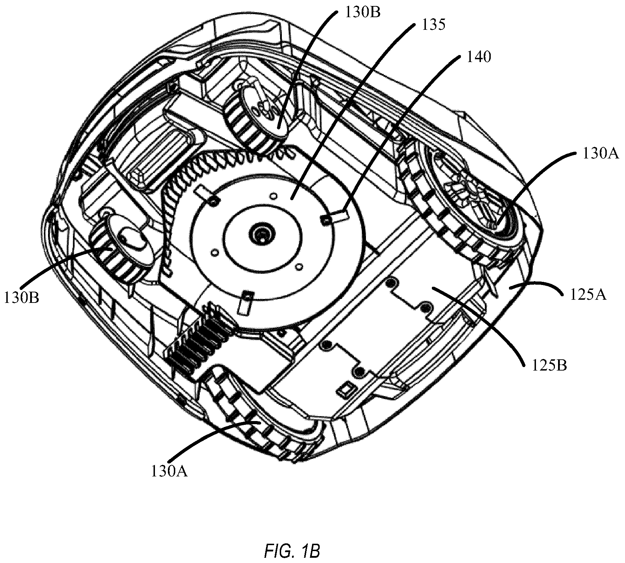

Although the power tool device 105 illustrated in FIGS. 1A and 1B is robotic mower 105, embodiments explained herein similarly apply to and can be used in conjunction with a variety of power tool devices 105 including power tools and/or accessories. For instance, the power tool device 105 may be another power tool, test and measurement equipment, a vacuum cleaner, a worksite radio, outdoor power equipment, a vehicle, a power tool battery pack, a charger configured to charge a power tool battery pack, or another device. Power tools can include drills, circular saws, jig saws, band saws, reciprocating saws, screw drivers, angle grinders, straight grinders, hammers, multi-tools, impact wrenches, rotary hammers, impact drivers, angle drills, pipe cutters, grease guns, hydraulic cutters, hydraulic crimpers, magnetic drills, and the like. Test and measurement equipment can include digital multimeters, clamp meters, fork meters, wall scanners, infrared (IR) thermometers, laser distance meters, laser levels, remote displays, insulation testers, moisture meters, thermal imagers, inspection cameras, and the like. Vacuum cleaners can include stick vacuums, hand vacuums, upright vacuums, carpet cleaners, hard surface cleaners, canister vacuums, broom vacuums, and the like. Outdoor power equipment can include blowers, chain saws, edgers, hedge trimmers, lawn mowers, trimmers, and the like. Other devices can include electronic key boxes, calculators, cellular phones, head phones, cameras, motion sensing alarms, flashlights, work lights (e.g., free-standing work lights), weather information display devices, a portable power source, a digital camera, a digital music player, a radio, and multi-purpose cutters. In some embodiments, the power tool device 105 may be non-motorized as indicated by a number of the above examples.

As indicated in FIG. 1A, in some embodiments, the power tool 105 is configured to bidirectionally wirelessly communicate with the external device 115, the docking station 110, and/or the blockchain network 150. In some embodiments, the power tool 105 is configured to directly communicate with the external device 115 when the power tool 105 is within communication range of the external device 115 (e.g., via Bluetooth^{™}, WiFi^{™}, or the like). In some embodiments, the power tool 105 is additionally or alternatively configured to communicate with the external device 115 via an intermediary device such as a cellular communication tower/base station, another device in a cellular network, or the like (e.g., when the power tool 105 is outside of direct communication range with the external device 115). The external device 115 may be, for example, a smart phone (as illustrated), a laptop computer, a tablet computer, a personal digital assistant (PDA), a wireless communication router that allows another external device 115 that is located remotely from the power tool 105 to communicate with the power tool 105, or another electronic device capable of communicating with the power tool 105. As described in greater detail below, in some embodiments, the external device 115 sends commands to the power tool 105 to enable or disable certain features/operations of the power tool 105 in accordance with instructions received from a blockchain network 150. In some embodiments, the communication between the external device 115 and the power tool 105 may be wired (e.g., via a Universal Serial Bus (USB) cord configured to connect to respective USB ports of the external device 115 and the power tool 105). In some embodiments, the battery pack 245 (see FIGS. 2A and 2B) of the power tool 105 may additionally or alternatively communicate with the external device 115, the blockchain network 150, and/or the docking station 110 using its own separate network interface 260 as explained in greater detail below with respect to FIG. 2B.

Also as indicated in FIG. 1A, in some embodiments, the external device 115 is configured to bidirectionally communicate with the power tool 105, the docking station 110, and/or the blockchain network 150. In some embodiments, the docking station 110 may also be configured to bidirectionally communicate with any one or a combination of the power tool 105, the external device 115, and the blockchain network 150.

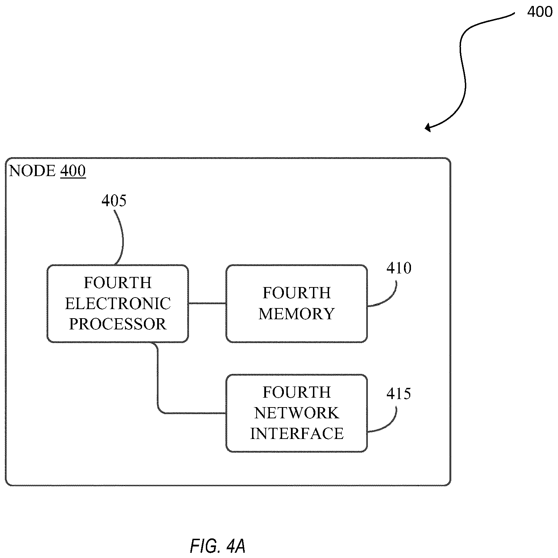

In some embodiments, the blockchain network 150 includes a plurality of nodes 400 that are communicatively coupled to at least one other node 400. Nodes 400 and the blockchain network 150 (e.g., potential architectures of the blockchain network 150) are explained in further detail below with respect to FIGS. 4A-4D. In some embodiments, any kind of electronic device configured to communicate over a network as part of the communication system 100 may act as a node 400 of the blockchain network 150. In some embodiments, at least one of the external device 115, the docking station 110, the power tool 105, and the battery pack 245 acts as a node 400 of the blockchain network 150 (e.g., a full node or a light node as explained in greater detail below). In other embodiments, the external device 115 is not a node 400 of the blockchain network 150, but connects the power tool 105 to a node of the blockchain network 150. In some embodiments, the power tool 105 and the battery pack 245 are not nodes 400 of the blockchain network 150 but merely may communicate with one or more nodes 400 of the blockchain network 150.

While FIG. 1A illustrates one power tool 105, one charging station 110, and one external device 115, in some embodiments, the communication system 100 includes additional power tools 105, charging stations 110, and/or external devices 115. In some embodiments, a single external device 115 may be configured to communicate with multiple power tools 105. As described throughout this application, while the blockchain network 150 is shown as a separate entity in FIG. 1A, in some embodiments, one or more of the power tool 105, the charging station 110, the external device 115, and/or the battery pack 245 (see FIG. 2B) may act as a node 400 that forms part of the blockchain network 150.

FIG. 1B illustrates a bottom perspective view of the power tool 105 according to some example embodiments. The power tool 105 may include a housing 125 that includes an outer housing 125A (i.e., outer housing shell) and an inner housing 125B. The outer housing 125A may be coupled to the inner housing 125B. The power tool 105 also may include wheels 130 (i.e., a set of wheels 130) coupled to the inner housing 125B and configured to rotate with respect to the housing 125 to propel the power tool 105 on an operating surface (e.g., a yard to be mowed). The wheels 130 may include motor-driven wheels 130A and non-motor-driven wheels 130B. In the embodiment shown in FIG. 1B, two rear wheels 130A are motor-driven wheels 130A while two front wheels 130B are non-motor-driven wheels 130B. In other embodiments, the power tool 105 may include a different wheel arrangement (e.g., a different number of total wheels, a different number of each type of wheel, different wheels being motor-driven or non-motor-driven, and/or the like). In some embodiments, the housing 125 may not include the outer housing 125A and the inner housing 125B. Rather, the housing 125 may include a single integrated body/housing to which the wheels 130 are attached.

In some embodiments, the power tool 105 includes a wheel motor 235 (see FIG. 2A) coupled to one or more wheels 130 and configured to drive rotation of the one or more wheels 130. In some embodiments, the power tool 105 includes multiple wheel motors 235 where each wheel motor 235 is configured to drive rotation of a respective motor-driven wheel 130A (see FIG. 2A).

In some embodiments, the power tool 105 includes a cutting blade assembly 135 coupled to the inner housing 125B and configured to rotate with respect to the housing 125 to cut grass on the operating surface. The cutting blade assembly 135 may include a rotating disc to which a plurality of cutting blades 140 configured to cut the grass are attached. In some embodiments, the power tool 105 includes a cutting blade assembly motor 240 (see FIG. 2A) coupled to the inner housing 125B and to the cutting blade assembly 135. The cutting blade assembly motor 240 may be configured to drive rotation of the cutting blade assembly 135 to cut the grass on the operating surface.

In some embodiments, the power tool 105 and/or the docking station 110 include additional components and functionality than is shown and described herein.

FIG. 2A is a block diagram of the power tool 105 according to some example embodiments. In the embodiment illustrated, the power tool 105 includes a first electronic processor 205 (for example, a microprocessor or other electronic device). The first electronic processor 205 includes input and output interfaces (not shown) and is electrically coupled to a first memory 210, a first network interface 215, an optional first input device 220, an optional display 225, one or more sensors 230, a left rear wheel motor 235A, a right rear wheel motor 23 5B, a cutting blade assembly motor 240, and a battery 245 (e.g., a battery pack 245). In some embodiments, the power tool 105 includes fewer or additional components in configurations different from that illustrated in FIG. 2A. For example, the power tool 105 may not include the first input device 220 and/or the first optional display 225. As another example, the power tool 105 may include a height adjustment motor configured to adjust a height of the cutting blade assembly 135. As yet another example, the power tool 105 may include additional sensors or fewer sensors than the sensors 230 described herein. As yet another example, the power tool 105 may not include the motors 235, 240 and may instead include a single motor configured to drive a tool bit, for example, when the power tool 105 is a hand-held power tool 105 such as a power drill rather than a robotic power tool 105. As another example, the power tool 105 may be a power tool device 105 that does not include any motors. In some embodiments, the power tool 105 performs functionality other than the functionality described below.

The first memory 210 may include read only memory (ROM), random access memory (RAM), other non-transitory computer-readable media, or a combination thereof. The first electronic processor 205 is configured to receive instructions and data from the first memory 210 and execute, among other things, the instructions. In particular, the first electronic processor 205 executes instructions stored in the first memory 210 to perform the methods described herein.

The first network interface 215 is configured to send data to and receive data from other devices in the communication system 100 (e.g., the docking station 110, the external device 115, one or more nodes 400 of the blockchain network 150, etc.). In some embodiments, the first network interface 215 includes one or more transceivers for wirelessly communicating with the external device 115 and/or the docking station 110 (e.g., a first radio frequency (RF) transceiver configured to communicate via Bluetooth^{™}, WiFi^{™}, or the like). The first network interface 215 may include an additional transceiver for wirelessly communicating with the blockchain network 150 (and/or the external device 115 and/or the docking station 110) via, for example, cellular communication. In some embodiments, at least some of the transceivers and/or receivers of the power tool 105 may be combined or share some elements (e.g., an antenna and/or other hardware). Alternatively or additionally, the first network interface 215 may include a connector or port for receiving a wired connection to the external device 115, such as USB cable. In some embodiments, the power tool 105 may additionally or alternatively communicate with the docking station 110 when the power tool 105 is docked/coupled to the docking station 110 (e.g., via first terminals of the power tool 105 that are connected to second terminals of the docking station 110).

The first input device 220 is configured to allow the first electronic processor 205 to receive a user input from a user to, for example, set/adjust an operational parameter of the power tool 105. The first display 225 is configured to display a user interface to the user. Similar to the user interface of the external device 115 described previously herein, the user interface displayed on the first display 225 may allow the user to access and interact with power tool information. In some embodiments, the first display 225 may also act as the first input device 220. For example, a touch sensitive input interface may be incorporated into the first display 225 to allow the user to interact with content provided on the first display 225. The first display 225 may be a liquid crystal display (LCD) screen, an organic light emitting display (OLED) display screen, or an E-ink display. In some embodiments, the first display 225 includes future-developed display technologies.

In some embodiments, the first electronic processor 205 is in communication with a plurality of sensors 230 that may include electromagnetic field sensors, radio frequency sensors (e.g., radio frequency identification (RFID) interrogators/sensors), Hall sensors, current sensors, other magnetic sensors, and/or the like. In some embodiments, data from one or more Hall sensors may be used by the first electronic processor 205 to determine how fast the a motor of the power tool 105 is rotating.

In some embodiments, the battery pack 245 provides power to the first electronic processor 205 and to other components of the power tool 105 such as the motors 235A, 235B, 240 and the first display 225. In some embodiments, power may be supplied to other components besides the first electronic processor 205 through the first electronic processor 205 or directly to the other components. In some embodiments, when power is provided directly from the battery pack 245 to the other components, the first electronic processor 205 may control whether power is provided to one or more of the other components using, for example, a respective switch (e.g., a field-effect transistor) or a respective switching network including multiple switches. For example, the first electronic processor 205 may control whether current from the battery pack 245 is provided to a motor of the power tool 105. In some embodiments, the power tool 105 includes active and/or passive conditioning circuitry (e.g., voltage step-down controllers, voltage converters, rectifiers, filters, etc.) to regulate or control the power received by the components of the power tool 105 (e.g., the first electronic processor 205, the motors, 235A, 235B, 240, etc.) from the battery pack 245. In some embodiments, the battery pack 245 is a removable battery pack. In some embodiments, the battery pack 245 is configured to receive charging current from the docking station 110 when the power tool 105 is docked at the docking station 110 and electrically connected thereto.

FIG. 2B illustrates a block diagram of the battery pack 245 according to some example embodiments. In the example shown, the battery pack 245 includes a third electronic processor 250 electrically connected to a third memory 255 and a third network interface 260. These components are similar to the like-named components of the power tool 105 explained above with respect to FIG. 2A and function in a similar manner as described above. For example, the third electronic processor 250 may send data to and receive data from the external device 115 and/or the blockchain network 150 via the third network interface 260.

In some embodiments, the battery pack 245 may bidirectionally communicate with the power tool 105 to which the battery pack 245 is attached. For example, in response to the battery pack 245 being connected with the power tool 105, the battery pack 245 may transmit battery pack information to the power tool 105 (e.g., via third terminals of the power tool 105 that are connected to fourth terminals of the battery pack 245). The power tool 105 may then communicate at least a portion of the battery pack information to the external device 115 and/or the blockchain network 150. The battery pack information may include, among other things, battery pack usage information, a battery pack identifier, battery pack ownership information, and/or the like. The battery pack information may include any information that specifically or generally identifies the battery pack 245 (e.g., a location at which the battery pack 245 was sold or last used, etc.).

In some embodiments, the battery pack 245 may communicate with the external device 115, the blockchain network 150, and/or the docking station 110 using its own separate network interface 260 to, for example, transmit battery pack information and/or receive blockchain authentication information. In some embodiments, in response to the battery pack 245 being connected with the power tool 105, the power tool 105 may transmit power tool information to the battery pack 245 (e.g., via third terminals of the power tool 105 that are connected to fourth terminals of the battery pack 245). The battery pack 245 may then communicate at least a portion of the power tool information to the external device 115 and/or the blockchain network 150. The power tool information may include, among other things, power tool usage information, a power tool identifier, power tool ownership information, and/or the like. The power tool information may include any information that specifically or generally identifies the power tool 105 (e.g., a location at which the power tool 105 was sold or last used, etc.).

In some embodiments, the battery pack 245 includes fewer or additional components in configurations different from that illustrated in FIG. 2B. For example, the battery pack 245 may not include its own network interface 260 and may instead rely on the first network interface 215 of the power tool 105 to communicate with the external device 115 and/or the blockchain network 150.

In some embodiments, the first electronic processor 205 is configured to control one or more operations of the power tool 105. For example, the first electronic processor 205 controls one or more switches (e.g., field-effect transistors (FETs)) to provide power to one of the motors 235, 240 based on signals received from one or more Hall sensors. In some embodiments, the first electronic processor 205 controls whether one or more certain components of the power tool 105 (e.g., the motors 235, 240; the first network interface 215, etc.) are allowed to be operated in an unrestricted manner, are allowed to be operated in a restricted manner, or are prevented from operating at all. For example, the power tool 105 may be configured to operate or may be prevented from operating in response to a user input that attempts to operate the power tool 105. Operating in an unrestricted manner may include allowing the power tool 105 to operate in accordance with a full range of operational limits. Comparatively, operating in a restricted manner may include only allowing a limited current to the power tool 105 (or to a specific component of the power tool 105 such as the motor 235, 240) from the battery pack 245, only allowing a limited torque output of the motor 235, 240 of the power tool 105, or the like. Preventing operation of one or more components of the power tool 105 may include preventing the motor 235, 240 from operating altogether. In some embodiments, some features/components of the power tool 105 may be enabled/operational while other features/components of the power tool 105 are disabled/not operational.

In some embodiments, the third electronic processor 250 of the battery pack 245 may similarly control operations of the power tool 105 by allowing current to flow to the power tool 105 in an unrestricted manner, by allowing current to flow to the power tool 105 in a restricted manner, or by preventing current from flowing to certain terminals of the power tool 105 altogether. For example, the third electronic processor 250 may limit the current drawn from the battery pack 245 to a particular current level or may limit the power output by the battery pack 245 to a particular power level. For instance, the third electronic processor 250 may limit current (or prevent current from flowing altogether) from certain terminals of the battery pack 245 that supply power to a motor 235, 240 of the power tool 105 but may not limit a current from other terminals of the battery pack 245 that supply power to the first electronic processor 205 and/or the first network interface 215. Accordingly, in some situations, the battery pack 245 may supply power to the power tool 105 to allow for limited functionality (e.g., functionality by the first electronic processor 205 to communicate with the battery pack 245 and/or the external device 115) while other functionality is disabled (e.g., motor operation).

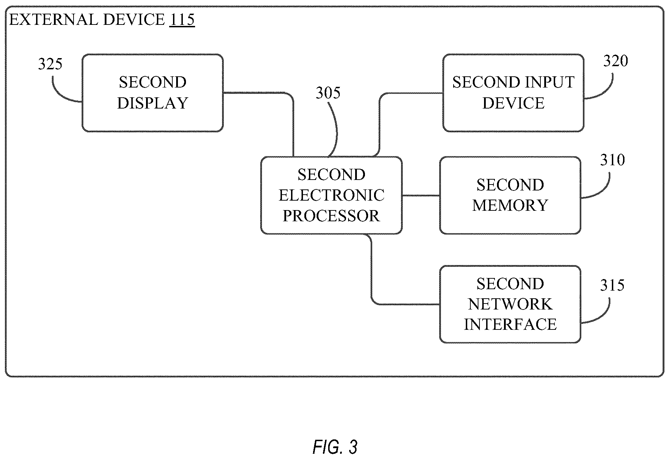

FIG. 3 is a block diagram of the external device 115 according to some example embodiments. In the example shown, the external device 115 includes a second electronic processor 305 electrically connected to a second memory 310, a second network interface 315, a second user input device 320, and a second display 325. These components are similar to the like-named components of the power tool 105 explained above with respect to FIG. 2A and function in a similar manner as described above. For example, the second display 325 may also function as an input device (e.g., when the second display 325 is a touchscreen). In some embodiments, the second electronic processor 305 sends data to and receives data from the power tool 105 and/or the battery pack 245 via the second network interface 315. In some embodiments, the second network interface 315 includes one or more transceivers for wirelessly communicating with the power tool 105 (e.g., a second RF transceiver configured to communicate via Bluetooth^{™}, WiFi^{™}, or the like). The second network interface 315 may include an additional transceiver for wirelessly communicating with the blockchain network 150 via, for example, cellular communication. In some embodiments, at least some of the transceivers and/or receivers of the external device 115 may be combined or share some elements (e.g., an antenna and/or other hardware). In some embodiments, the external device 115 includes fewer or additional components in configurations different from that illustrated in FIG. 3. For example, the external device 115 may include a battery, a global positioning system (GPS) device, or the like. In some embodiments, the external device 115 performs functionality other than the functionality described below.

As indicated previously herein, in some embodiments, the blockchain network 150 includes a plurality of nodes 400. In some embodiments, any kind of electronic device configured to communicate to other electronic devices may act as a node 400. FIG. 4A is an example embodiment of a node 400 of the blockchain network 150. In the example shown, the node 400 includes a fourth electronic processor 405 electrically connected to a fourth memory 410, and a fourth network interface 415. These components are similar to the like-named components of the power tool 105 explained above with respect to FIG. 2A and function in a similar manner as described above. For example, the fourth electronic processor 405 sends data to and receives data from the power tool 105, the battery pack 245, the external device 115, the docking station 110, and/or other nodes 400 via the fourth network interface 415. As indicated previously herein, in some embodiments, at least one of the external device 115, the docking station 110, the power tool 105, and the battery pack 245 acts as a node 400 of the blockchain network 150 in some situations. Each node 400 in the blockchain network 150 may possess an address, such as an Internet Protocol (IP) address.

As described below, the node 400 is a communication endpoint and may possess different functionality on the blockchain 150 based upon an assigned role. For instance, a node 400 may be a light node or a full node. A light node, sometimes referred to as a lite node, may be configured to store and provide data necessary to accommodate rapid transactions or frequently repeated activities on the blockchain 150. For example, a node 400 configured as a light node may be configured to send or receive validation requests within the blockchain 150 but may not be configured to validate or authenticate the requests. In contrast, a full node may be configured to maintain a full record (i.e., ledger) of the blockchain 150 and, unlike the light node, have full validation voting rights on the blockchain 150. Full nodes may be configured to have sub-types, such as authority nodes, mining/validation nodes, master nodes, or the like.

One example embodiment of a full node is an authority node. An authority node may be configured to a manage the access levels for other types of full nodes. For instance, an authority node may be configured to set the specific access levels for light nodes on the network. For example, an authority node may permit one or more light nodes to send and receive validation requests, but only for specific power tools 105. For instance, a light node may be paired with a particular type of power tool 105, such as a robotic lawnmower, and will not function with power tools 105 of any other type. In other instances, a light node may function with a family of power tools 105, such as robotic lawnmowers, robotic snowblowers, or the like. In other embodiments, an authority node may configure access for a light node limited to a certain time of day, or a duration of time, or a preset number of requests/receipts for validation, or the like. In another instance, an authority node is configured to allow or prevent new nodes 400 on the blockchain network 150. For instance, an authority node may be configured to allow a specific number of new nodes 400 on the network, or a particular ratio of node types to other node types, such as one full node to three light nodes, or the like. In some examples, an authority node generates a block on the blockchain associated with the new node, and a consensus of other authority nodes, or all nodes, must be reached before the new node is functional.

In some embodiments, a block is a data structure within the blockchain network 150 that includes address information (e.g., an address of a transmitting device/node that generated the block, an address of one of more destination devices/nodes or an indication that the block is generally addressed to all nodes 400 within the blockchain network 150) and data chunks with a requested function to be performed by the nodes 400 using data included in the data chunks. For example, the data chunks may include information to be validated by the blockchain network 150 such as the battery pack information and the power tool information described previously herein and described in further detail below.

Another example embodiment of a full node is a mining node, also referred to as a validation node. In some instances, a mining node is responsible for executing/solving mathematical functions to validate transactions/information within the blockchain network 150. For instance, a light node may request validation of a new block on the blockchain 150, and a mining node is programmed to perform the calculations to solve the function, or problem, of the block. In some examples, many mining nodes perform the calculation to solve the same problem and communicate their computed answer to other nodes 400 within the blockchain 150. In such examples, once the calculation is complete, the mining node submits a new block to the blockchain 150, such that other nodes 400 may verify the solved problem.

Another example embodiment of a full node is a master node. Similar to a mining node, a master node may be configured to perform validations on the blockchain 150. In some instances, a master node does not submit a new block for verification by other nodes 400, but rather only performs the validation of blocks submitted by other nodes 400. For example, a mining node may complete a problem (e.g., execute a pre-programmed function using data chunks included a block generated by another node 400) and submit a new block to the blockchain 150, where a master node validates the solution to the problem. In this instance, the master node would not add another block to the blockchain 150 but would instead only verify that the mining node completed the computation successfully.

In some embodiments, when a block is initially generated (e.g., by a full node or light node) but has not yet been solved (e.g., by a full node), the block may be referred to as an incomplete block. When a block has been solved or a new block is generated with a solution for incomplete block, the block may be referred to as a complete block. However, a complete block may be an unvalidated block (rather than a validated block) because it may be required that many complete blocks are accurately generated by many different nodes 400 in order to validate the data/information included in the complete blocks. For example, the blockchain network 150 may use a consensus mechanism to form an agreement of the validity of the block from among a predetermined threshold of the nodes 400 of the blockchain network 150. For example, the predetermined threshold may be a percentage (e.g., 51%, 60%, etc.) of the nodes of the blockchain network 150 that accurately solved the problem of the block by performing a pre-programmed function based on the data/information included in the block.

Once enough nodes 400 have validated a block on the blockchain 150 (e.g., a number of nodes 400 greater than or equal to the predetermined threshold), the nodes 400 form a consensus in agreement of the validity of the block. The consensus mechanism may vary between blockchains, and may include proof of work (PoW), proof of stake (PoS), proof of capacity (PoC), proof of activity (PoA), proof of burn (PoB), proof of time (PoT), or the like. A blockchain utilizing a proof of work consensus mechanism may be Bitcoin ^{™}, Litecoin ^{™}, Ethereum ^{™}, or the like. When the block is validated, the block may be referred to as a validated block. The validated block may be permanently added to a ledger of the blockchain network 150.

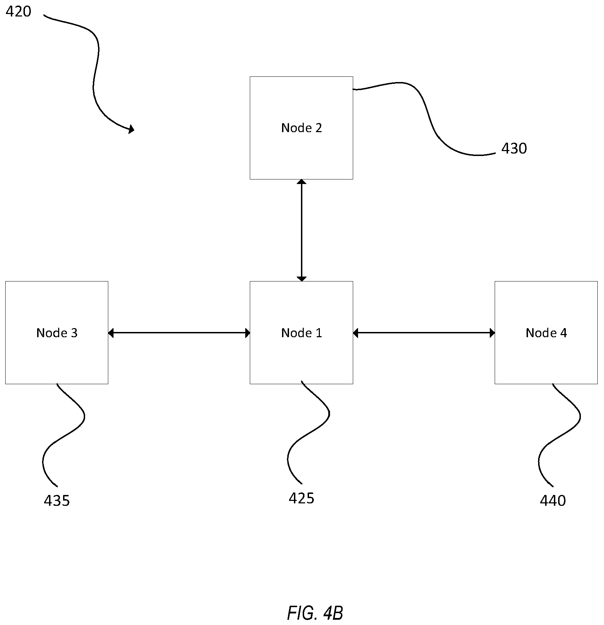

FIG. 4B is a simplified illustration of a first architecture of multiple nodes 400 of the blockchain network 150 according to some examples. In the example shown, the blockchain network 150 may be set up as a centralized blockchain 420. In this instance, one node (e.g., Node 1 that is labeled as element 425) acts as a central hub and communicates with all other nodes 430, 435, 440 on the blockchain 150. However, these other nodes 430, 435, 440 on the blockchain 150 may not communicate with each other. For example, node 425 may be configured as an authority node or a master node, and may be responsible for facilitating the functionality of other nodes on the blockchain 150 as described previously herein with respect to FIG. 4A. In this example, node 425 is connected to node 430, node 435, and node 440, with the node 425 located centrally, and acting as a superior node to the other nodes 430, 435, 440 on the blockchain 150. In some examples, nodes 430, 435, 440 are mining nodes or light nodes, or other nodes as assigned by node 425. In this centralized blockchain example, the nodes 425, 430, 435, 440 on the blockchain 150 follow a command structure or hierarchy.

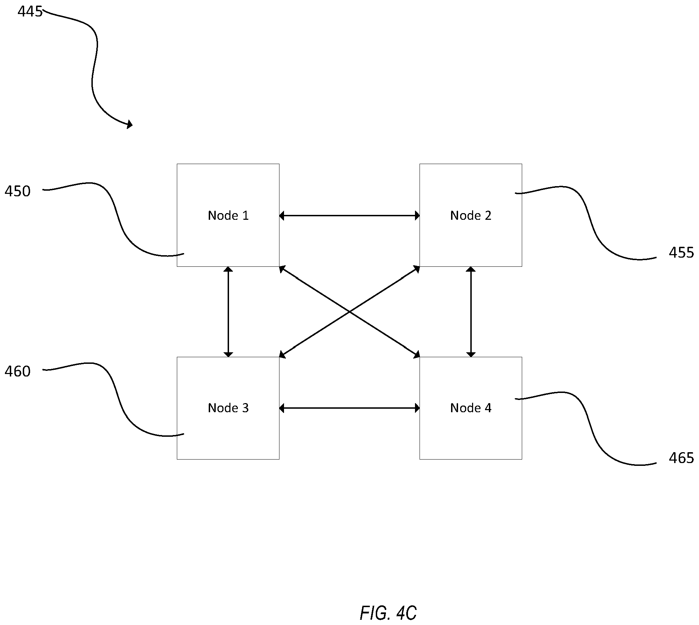

FIG. 4C is a simplified illustration of a second architecture of multiple nodes 400 of the blockchain network 150 according to some examples. In the example shown, the blockchain network 150 may be set up as a decentralized blockchain 445. In this instance, all nodes 450, 455, 460, 465 communicate with all other nodes. No particular node is superior to any other node, and the functions of one node may vary depending upon the requirements of the blockchain 150. For example, node 450 may be a mining node for a certain duration of time, then transition to an authority node for another duration of time, then transition to a light node for another duration of time. In another example, node 450 may be a mining node for only a particular number of blocks, then a master node for another number of blocks, or the like. In such examples, the assigned node type varies and may be determined by a user who controls the node, or by a consensus mechanism of the blockchain 150 itself. All other nodes on the network, such as node 455, node 460, and node 465, may function similarly to node 450.

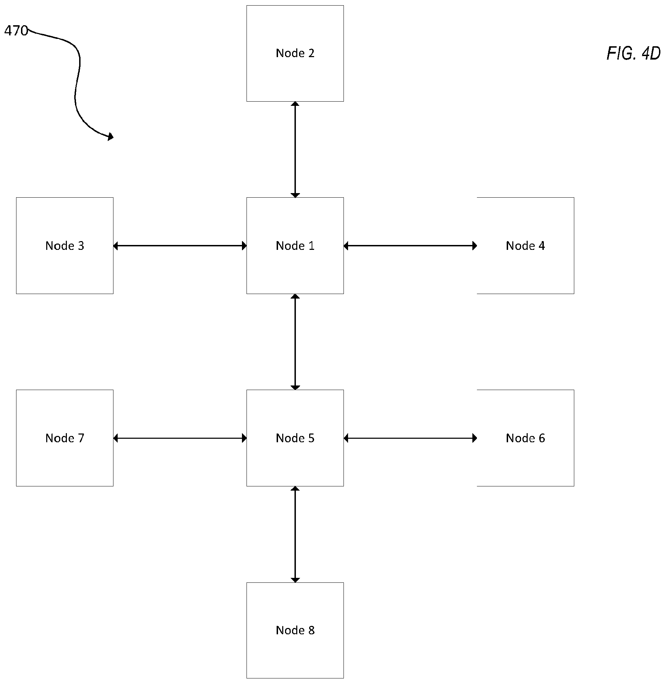

FIG. 4D is a simplified illustration of a third architecture of multiple nodes 400 of the blockchain network 150 according to some examples. In the example shown, the blockchain 150 may be set up as a hybrid blockchain 470, containing aspects of both a centralized and a decentralized blockchain as explained previously herein with respect to FIGS. 4B and 4C, respectively. In this example, some nodes may act as subordinate to other nodes. However, there is no central single authority node, and many nodes may function as superior or subordinate nodes.

Power tools and their attachments (e.g., battery packs, docking stations, etc.) are often valuable and often portable. Accordingly, these items are often stolen. Many power tools and their attachments do not include any type of authentication or may include only local authentication (e.g., between the power tool and the attachment) in order to allow for their operation. Accordingly, a thief that steal both a power tool and its attachment from an owner may be able to successfully operate the power tool. Thus, there is a technological problem with current power tool/battery pack authentication methods because such methods may allow these products to operate at undesirable times, for example, after the products have been stolen.

The systems, methods, and devices described herein address the above-noted technological problem by using blockchain technology to authenticate power tools and/or their attachments before the power tool is able to operate. Blockchain authentication may be more secure than mere local authentication in many situations and is more difficult for a thief to hack to put the power tool in an operable state.

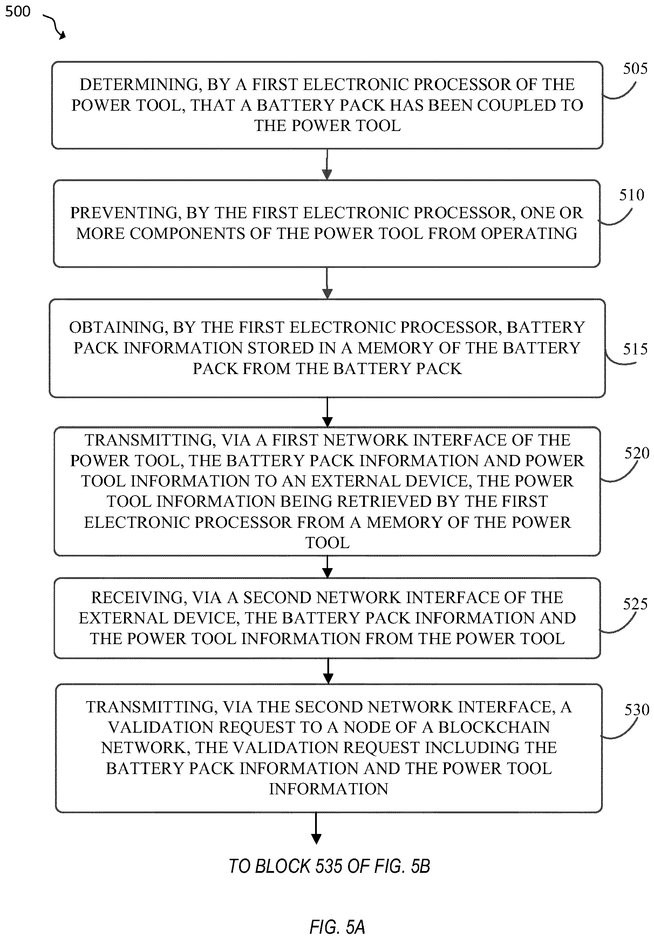

FIGS. 5A-5B illustrate a flowchart of a method 500 that may be performed by the power tool 105, the battery pack 245, and/or the external device 115 to authenticate a power tool attachment (e.g., the battery 245) using blockchain technology. While a particular order of processing steps, signal receptions, and/or signal transmissions is indicated in FIGS. 5A-5B as an example, timing and ordering of such steps, receptions, and transmissions may vary where appropriate without negating the purpose and advantages of the examples set forth in detail throughout the remainder of this disclosure. While the method 500 includes at least some actions that may be performed by each of the power tool 105, the battery pack 245, and the external device 115 depending on the implementation, it should be understood that separate methods may be performed by only one of these devices 105, 115, 245 where these separate methods include only the blocks executed by the respective device 105, 115, 245.

At block 505, the first electronic processor 205 of the power tool 105 may determine that a battery pack 245 has been coupled to the power tool 105. For example, the first electronic processor 205 may include a sense terminal that connects an otherwise open circuit when the battery pack 245 is coupled to the power tool 105. In alternate embodiments, the third electronic processor 250 of the battery pack 245 may determine that the battery pack 245 has been coupled to the power tool 105.

At block 510, the first electronic processor 205 may prevent one or more components of the power tool from operating (e.g., the motors 235, 240) as described previously herein. In alternate embodiments, the third electronic processor 250 may prevent current from being provided to the power tool 105 over at least some terminals of the battery pack 245 (e.g., main power terminals that may provide power to the motors 235, 240). In some embodiments, at block 510, the first electronic processor 205 and/or the third electronic processor 250 may prevent the power tool 105 from being operated (or may only allow the power tool 105 to be operated in a restricted manner such as limited current supplied to a motor of the power tool 105, etc.) until a validation is received from a blockchain network 150. To attempt to obtain blockchain validation to allow the power tool 105 to operate in an unrestricted manner, the devices 105, 115, and/or 245 may perform the blocks of method 500 explained below.

At block 515, the first electronic processor 205 obtains battery pack information stored in the third memory 255 of the battery pack 245 from the battery pack 245. Alternatively, the third electronic processor 250 obtains power tool information stored in the first memory 210 of the power tool 105 from the power tool 105.

At block 520, the first electronic processor 205 transmits, via the first network interface 215 of the power tool 105, the battery pack information and the power tool information (retrieved from its own first memory 210) to the external device 115. Alternatively, the third electronic processor 250 transmits, via the third network interface 260 of the battery pack 245, the battery pack information and the power tool information to the external device 115.

At block 525, the second electronic processor 305 of the external device 115 receives, via the second network interface 315 of the external device 115, the battery pack information and the power tool information from the power tool 105 or from the battery pack 245.

At block 530, the second electronic processor 305 of the external device 115 transmits, via the second network interface 315, a validation request to a node 400 of the blockchain network 150. In some embodiments, the validation request includes the battery pack information and the power tool information.

As mentioned previously herein, in some instances, the external device 115 is not a node 400 of the blockchain network 150 and may simply provide a communication link to transfer information between (i) the power tool 105 and/or the battery 245 and (ii) one or more nodes 400 of the blockchain network 150.

In some instances, the external device 115 may be configured to act as a full node or a light node. In some instances, the external device 115 may be configured as a full node but not permitted to perform validation of blocks including information about power tools 105 or battery packs 245 paired with the external device 115. For example, an authority node may determine that external device 115 acts as a light node when requesting validation of battery pack information associated with a power tool 105 or a battery pack 245 in communication with external device 115. Continuing this example, the authority node may determine that the external device 115 acts as a full node when validating blocks associated with power tools or battery packs that are not paired with external device 115. In other words, in some instances, the external device 115 may not validate a block that was generated by the external device 115 itself, but may participate in validation of other blocks generated by other nodes 400 on the blockchain 150.

In some embodiments, the external device 115 is configured to act as a light node that makes an authentication request on the blockchain 150. For example, in response to the external device 115 receiving the battery pack information and the power tool information from the power tool 105 or the battery pack 245, the external device 115 creates a block on the blockchain 150 using the battery pack information and the power tool information as the data chunk included in the in the block. As mentioned previously herein and as described in greater detail below, the blockchain 150 (i.e., each node 400 of a subset or all of the nodes 400 included in the blockchain network 150) then attempts to complete validation of the battery pack information and the power tool information.

In some embodiments, the blockchain 150 (i.e., each node 400 of a subset or all of the nodes 400 included in the blockchain network 150) uses a smart contract to validate the battery pack information and the power tool information. A smart contract may be a programmed computer code that includes instructions or predetermined steps for performing a function and is stored on the blockchain 150 (i.e., on each node of the subset or all of the nodes 400 included in the blockchain network 150). In some examples, the smart contract includes a predetermined ownership pair between a power tool 105 and a battery pack 245. For example, a smart contract may contain instructions limiting a particular power tool, such as power tool 105, to a particular battery, such as battery pack 245. In some embodiments, the power tool 105 may be paired with multiple battery packs 245 according to the smart contract. For example, a power tool 105 may be paired with a battery pack 245 through a digital identification (ID) recorded on the blockchain. This digital ID is a unique cryptographic identity, or address, tied to only one thing, such as power tool 105. A particular power tool 105 may have a unique digital ID, and a battery pack 245 may have a different unique digital ID. In this instance, each of multiple battery packs 245 will have their own unique digital ID. A smart contract may be programmed with a record of unique digital IDs, such that a power tool digital ID and a battery pack digital ID are paired. In other embodiments, multiple power tools 105 may be paired with one battery pack 245 and/or multiple battery packs 245 may be paired with one power tool 105. In some embodiments, docking station 110 may be paired with multiple power tools 105. In some instances, a single power tool 105 is paired with multiple docking stations 110.

In some examples, the digital ID takes the form of a non-fungible token (NFT). A NFT is a type of unique digital asset, and may be associated with a particular physical asset. For instance, a NFT may represent a specific power tool 105, battery pack 245, docking station 110, or the like. A particular NFT tied to a particular battery pack 245 is unique to that battery pack 245. This uniqueness of the NFT is cryptographically locked upon creation of the NFT, and may not be modified after the NFT is generated. For instance, when a NFT is generated for a particular battery pack 245, the NFT may not represent any other battery pack 245. In some instances, an individual user may own a NFT tied to a particular battery pack 245, and another NFT tied to a particular power tool 105. In this instance, the two NFT's may be paired, such the particular battery pack 245 functions with the particular power tool 105, but not with any other power tool 105. NFT's may also be traded, bought, sold, or otherwise exchanged such that ownership of an NFT may change, but the association of the NFT to the physical asset does not.

In some examples, a smart contract may contain the information pairing a particular power tool 105 with a particular battery pack 245. In some instances, the smart contract is performed by multiple nodes 400 on the blockchain 150. For instance, after a blockchain block corresponding with the battery pack information and the power tool information is generated (e.g., by the external device 115 acting as a node 400 or by a dedicated node 400 that received the validation request from the external device 115), multiple nodes 400 run the smart contract to attempt to validate the authenticity of the battery pack information and the power tool information. In some examples, this attempt to validate authenticity includes comparing the battery pack information and the power tool information to predetermined pairings, such as the pairing of a robotic mower 105 with a specific battery pack 245 or a specific docking station 110.

In some instances, the attempt to validate the authenticity of the battery pack information and the power tool information includes executing, by at least one node 400 of the blockchain network 150, a smart contract to compare a digital identification of the battery pack 245 stored on a blockchain of the blockchain network 150 to a digital identification of the power tool 105 stored on the blockchain. In this instance, the fourth electronic processor 405 of at least one node 400 of the blockchain network 150 may prevent the at least one node 400 from validating the battery pack information and the power tool information in response to determining that the digital identification of the battery pack 245 and the digital identification of the power tool 105 were not previously paired with each other.

Only blocks configured to perform blockchain validations may participate in the validation process. For example, a full node configured as a mining node may validate the new block, but a node 400 configured as a light node may not validate the new block. In some instances, only particular nodes 400 are part of the validation process.

Once the nodes 400 of the blockchain 150 have completed an attempt to validate the battery pack information and the power tool information and formed a consensus (e.g., using a consensus mechanism as explained previously herein), a blockchain authentication message is transmitted to the external device 115 by at least one node 400 of the blockchain network 150.

In instances where the blockchain consensus concluded that greater than or equal to a predetermined threshold (e.g., threshold percentage) of nodes 400 in the blockchain 150 were able to validate the battery pack information and the power tool information, the blockchain authentication message may indicate that the blockchain network 150 was able to validate the battery pack information and the power tool information. On the other hand, in instances where the blockchain consensus concluded that less than the predetermined threshold of nodes 400 in the blockchain 150 were able to validate the battery pack information and the power tool information or that the a predetermined time period has elapsed without the enough nodes 400 validating the information to meet the predetermined threshold, the blockchain authentication message may indicate that the blockchain network 150 was unable to validate the battery pack information and the power tool information.

At block 535, the second electronic processor 305 of the external device 115 receives, via the second network interface 315, the blockchain authentication message from at least one node 400 of the blockchain network 150. As explained above, the blockchain authentication message indicates whether the blockchain network 150 validated the battery pack information and the power tool information.

At block 540, the second electronic processor 305 transmits, via the second network interface 315, an authentication notification to the power tool 105 and/or the battery pack 245 based on the blockchain authentication message. For example, the authentication notification may include the indication of whether the blockchain network 150 validated the battery pack information and the power tool information. For example, the authentication notification may include such an indication by including a command to the power tool 105 and/or the battery pack 245 (i) to allow unrestricted operation (e.g., when the information was validated by the blockchain network 150) or (ii) to allow only restricted operation or not to allow operation at all (e.g., when the information was validated by the blockchain network 150).

At block 545, the first electronic processor 205 of the power tool 105 receives, via the first network interface 215, the authentication notification from the external device 115. Alternatively, the third electronic processor 250 of the battery pack 245 receives, via the third network interface 260, the authentication notification from the external device 115.

At block 550, the first electronic processor 205 controls an operation of the power tool 105 based on the authentication notification. For example, when the authentication notification indicates that the battery pack information and the power tool information were not validated by the blockchain network 150, the first electronic processor 205 may control the operation of the power tool 105 by at least one of allowing the power tool 105 to operate only in a restricted manner and continuing to prevent the one or more components of the power tool 105 (e.g., the motor 235, 240) from operating, for example, in response to user input requesting the power tool 105 operate. In some embodiments, the first electronic processor 205 may prevent operation of the power tool altogether. For example, when a user actuates a trigger of a power tool 105 to start a motor, the first electronic processor 205 may nevertheless prevent the motor from operating. On the other hand, when the authentication notification indicates that the battery pack information and the power tool information were validated by the blockchain network 150, the first electronic processor 205 controls the operation of the power tool 105 by allowing the power tool 105 to operate in an unrestricted manner by allowing the one or more components of the power tool 105 (e.g., a motor) to operate, for example, in response to user input requesting the power tool 105 operate (e.g. , in response to trigger actuation).

In some embodiments, at block 550, the third electronic processor 250 of the battery pack 245 controls whether the battery pack 245 provides current to the power tool 105 over at least some terminals of the battery pack (e.g., main power terminals that may provide power to the motors 235, 240) based on the authentication notification. For example, when the authentication notification indicates that the battery pack information and the power tool information were not validated by the blockchain network 150, the third electronic processor 250 may prevent current from flowing to the main terminals of the battery pack 245 to the power tool 105 or may limit a current supplied over the main terminals. Accordingly, the power tool 105 may not be able to operate or may be able to operate only in a restricted manner. On the other hand, when the authentication notification indicates that the battery pack information and the power tool information were validated by the blockchain network 150, the first electronic processor 205 controls current to flow in a normal manner over the main terminals of the battery pack 245 to allow the power tool 105 to operate in an unrestricted manner within its normal limits.

Accordingly, as noted above with respect to block 510, through execution of the method 500, in some embodiments, the first electronic processor 205 and/or the third electronic processor 250 may prevent the power tool 105 from being operated (or may only allow the power tool 105 to be operated in a restricted manner such as limited current being supplied to a motor of the power tool 105, etc.) until a validation is received from the blockchain network 150. In some embodiments, the power tool 105 and/or the battery pack 245 may be in a default state in which they are not configured to operate (e.g., at block 510), and the power tool 105 and/or the battery pack 245 may remain in this state until a message is received that indicates that a successful blockchain validation has occurred. Accordingly, in some embodiments, a message may only be provided to the power tool 105 and/or the battery pack 245 when a block chain validation is successful. In other embodiments, a message may be provided to the power tool 105 and/or the battery pack 245 when an attempted blockchain validation was not successful (and when the attempted blockchain validation was successful). A message indicating a lack of successful blockchain validation may cause the power tool 105 and/or the battery pack 245 to prevent operation of the power tool 105 and/or the battery pack 245 (e.g., enter block 510 of the method 500).

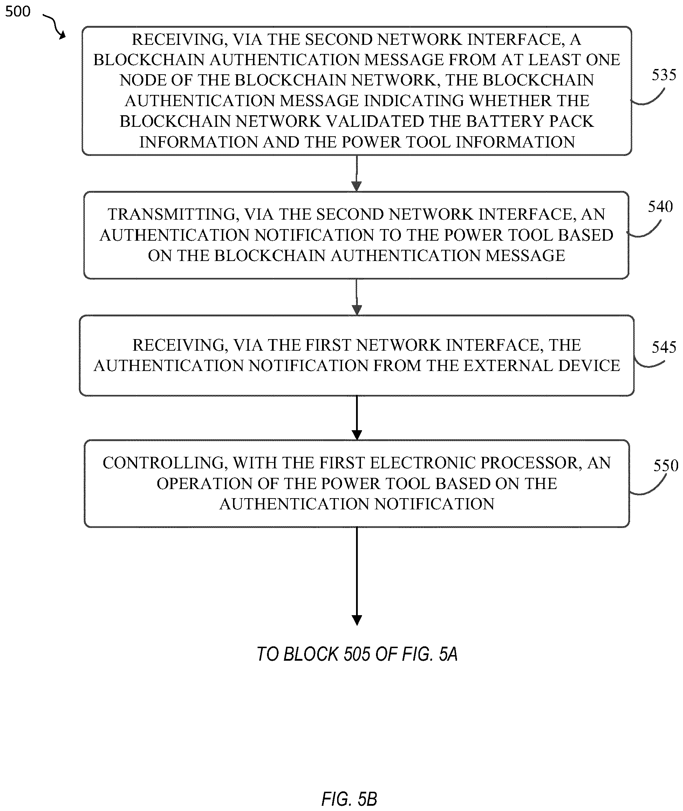

As indicated in FIG. 5B, upon completion of block 550, the method 500 may return to block 505 to repeat as desired (e.g., periodically) to validate the power tool 105 and the battery pack 245 for use with each other. In some embodiments, the method 500 may be executed each time a battery pack 245 is coupled to a power tool 105 and/or each time the power tool 105 is requested to operate via a user input.

As indicated in the above explanations of some blocks of the method 500, either the power tool 105, the battery pack 245, or both may communicate with the external device 115 and may prevent the power tool 105 from being operated (or may only allow the power tool 105 to be operated in a restricted manner such as limited current supplied to a motor of the power tool 105, etc.) until a validation is received from the blockchain network 150. Additionally, while the above example of the method 500 refers to the power tool 105 and the battery pack 245, the method 500 may be performed by any compatible power tool devices 105. For example, the method 500 may be performed by a battery pack 245 and a charger configured to charge the battery pack 245, by a robotic power tool 105 and a docking station 110 configured to charge the robotic power tool 105, and/or the like. In some embodiments, the method 500 may involve the external device 115 transmitting external device information (e.g., an external device identifier, external device ownership information, etc.) in addition to or as an alternative to one of the power tool information and the battery pack information to be validated by the blockchain network 150. For example, operation of the power tool 105 may be conditioned on power tool information and external device information of the external device 115 communicatively coupled to the power tool 105 being validated by the blockchain network 150.

In some embodiments, the external device 115 may not be included during execution of the method 500. For example, the power tool 105 and/or the battery pack 245 may be configured to perform the blocks of the method 500 explained above as well as the blocks of the method 500 executed by the external device 115. For example, the power tool 105 and/or the battery pack 245 may be configured to bidirectionally communicate directly with the blockchain network 150 without having the external device 115 relay communications. In some instances, the battery pack 245 and/or the power tool 105 may be configured as a node 400 of the blockchain network 150 in a similar manner as was described previously herein with respect to the external device 115.

Accordingly, various implementations of the systems and methods described herein provide, among other things, techniques for the use of blockchain for authentication of battery packs, accessories, and power tools. Other features and advantages of the invention are set forth in the following claims.

In the foregoing specification, specific examples have been described. However, one of ordinary skill in the art appreciates that various modifications and changes may be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover, in this document relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing," or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus.

An element proceeded by "comprises ... a," "has ... a," "includes ... a," or "contains ... a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially," "essentially," "approximately," "about," or any other version thereof, are defined as being close to as understood by one of ordinary skill in the art, and in one non-limiting example the term is defined to be within 10%, in another example within 5%, in another example within 1% and in another example within 0.5%. The term "coupled" as used herein is defined as connected, although not necessarily directly and not necessarily mechanically. A device or structure that is "configured" in a certain way is configured in at least that way but may also be configured in ways that are not listed.

## Claims

1. A communication system comprising:
a battery pack including a third memory configured to store battery pack information;
a power tool including a first electronic processor, a first memory, and a first network interface, wherein the first memory is configured to store power tool information, the first electronic processor configured to
obtain the battery pack information from the battery pack, transmit, via the first network interface, the battery pack information and the power tool information to an external device,
receive, via the first network interface, an authentication notification from the external device, and
control an operation of the power tool based on the authentication notification;
the external device including a second electronic processor, a second memory, and a second network interface, the second electronic processor configured to
receive, via the second network interface, the battery pack information and the power tool information from the power tool,
transmit, via the second network interface, a validation request to a node of a blockchain network, wherein the validation request includes the battery pack information and the power tool information,
receive, via the second network interface, a blockchain authentication message from at least one node of the blockchain network, wherein the blockchain authentication message indicates whether the blockchain network validated the battery pack information and the power tool information, and
transmit, via the second network interface, the authentication notification to the power tool, wherein the authentication notification is based on the blockchain authentication message.

2. The communication system of claim 1, wherein the blockchain authentication message indicates that the blockchain network was unable to validate the battery pack information and the power tool information;
wherein the authentication notification indicates that the battery pack information and the power tool information were not validated by the blockchain network; and
wherein the first electronic processor of the power tool is configured to control the operation of the power tool based on the authentication notification by at least one of allowing the power tool to operate in a restricted manner and preventing one or more components of the power tool from operating.

3. The communication system of claim 1, wherein the blockchain authentication message indicates that the blockchain network was able to validate the battery pack information and the power tool information;
wherein the authentication notification indicates that the battery pack information and the power tool information were validated by the blockchain network; and
wherein the first electronic processor of the power tool is configured to control the operation of the power tool based on the authentication notification by allowing the power tool to operate in an unrestricted manner.

4. The communication system of claim 1, wherein the battery pack information and the power tool information are attempted to be validated by the blockchain network using a consensus mechanism of a plurality of nodes of the blockchain network.

5. The communication system of claim 4, wherein attempting to validate the battery pack information and the power tool information includes:
executing, by at least one node of the blockchain network, a smart contract to compare a digital identification of the battery pack stored on a blockchain of the blockchain network to a digital identification of the power tool stored on the blockchain; and
prevent the at least one node of the blockchain network from validating the battery pack information and the power tool information in response to determining that the digital identification of the battery pack and the digital identification of the power tool were not previously paired with each other.

6. The communication system of claim 4, wherein the consensus mechanism is at least one selected from a group consisting of Proof of Work, Proof of Stake, Proof of Capacity, Proof of Activity, Proof of Burn, or Proof of Time.

7. The communication system of claim 1, wherein the external device is configured to act as a node of the blockchain network;
and optionally
wherein the external device is configured to act as a light node of the blockchain network with respect to the validation request that is transmitted by the external device; and
wherein the external device is configured to act as a full node of the blockchain network with respect to a second validation request transmitted by a different device than the external device.

8. The communication system of claim 1, wherein the first electronic processor is configured to control the operation of the power tool by controlling a current that is supplied to a motor of the power tool.

9. The communication system of claim 1, wherein the power tool includes one of a robotic power tool and a hand-held power tool.

10. The communication system of claim 1, wherein the battery pack information includes at least one of battery pack usage information, a battery pack identifier, and battery pack ownership information; and
wherein the power tool information includes at least one of power tool usage information, a power tool identifier, and power tool ownership information.

11. A method of controlling operation of a power tool, the method comprising:
determining, by a first electronic processor of the power tool, that a battery pack has been coupled to the power tool;
preventing, by the first electronic processor, one or more components of the power tool from operating;
obtaining, by the first electronic processor, battery pack information stored in a memory of the battery pack from the battery pack;
transmitting, via a first network interface of the power tool, the battery pack information and power tool information to an external device, the power tool information being retrieved by the first electronic processor from a memory of the power tool;
receiving, via a second network interface of the external device, the battery pack information and the power tool information from the power tool;
transmitting, via the second network interface, a validation request to a node of a blockchain network, the validation request including the battery pack information and the power tool information;
receiving, via the second network interface, a blockchain authentication message from at least one node of the blockchain network, the blockchain authentication message indicating whether the blockchain network validated the battery pack information and the power tool information;
transmitting, via the second network interface, an authentication notification to the power tool based on the blockchain authentication message;
receiving, via the first network interface, the authentication notification from the external device; and
controlling, with the first electronic processor, an operation of the power tool based on the authentication notification.

12. The method of claim 11, wherein the blockchain authentication message indicates that the blockchain network was unable to validate the battery pack information and the power tool information;
wherein the authentication notification indicates that the battery pack information and the power tool information were not validated by the blockchain network; and
wherein controlling the operation of the power tool based on the authentication notification includes at least one of allowing the power tool to operate in a restricted manner and continuing to prevent the one or more components of the power tool from operating.

13. The method of claim 11, wherein the blockchain authentication message indicates that the blockchain network was able to validate the battery pack information and the power tool information;
wherein the authentication notification indicates that the battery pack information and the power tool information were validated by the blockchain network; and
wherein controlling the operation of the power tool based on the authentication notification includes allowing the power tool to operate in an unrestricted manner by allowing the one or more components of the power tool to operate.

14. The method of claim 11, wherein the battery pack information and the power tool information are attempted to be validated by the blockchain network using a consensus mechanism of a plurality of nodes of the blockchain network;
and optionally
wherein controlling the operation of the power tool includes controlling a current that is supplied to a motor of the power tool.

15. A communication system comprising:
a battery pack including a second electronic processor, a second memory configured to store battery pack information, and a second network interface;
a power tool including a first electronic processor, a first memory configured to store power tool information, and a first network interface, wherein the first electronic processor is configured to
obtain the battery pack information from the battery pack,
transmit, via the first network interface, a validation request to a node of a blockchain network, wherein the validation request includes the battery pack information and the power tool information,
receive, via the first network interface, a blockchain authentication message from at least one node of the blockchain network, wherein the blockchain authentication message indicates whether the blockchain network validated the battery pack information and the power tool information, and
control an operation of the power tool based on the blockchain authentication message;
and optionally
wherein the second electronic processor of the battery pack is configured to:
obtain the power tool information from the power tool,
transmit, via the second network interface, a second validation request to the node of the blockchain network, wherein the second validation request includes the battery pack information and the power tool information,
receive, via the second network interface, a second blockchain authentication message from at least one node of the blockchain network, wherein the second blockchain authentication message indicates whether the blockchain network validated the battery pack information and the power tool information, and
control whether the battery pack provides current to the power tool over at least some terminals of the battery pack based on the blockchain authentication message;
and optionally
wherein the blockchain authentication message indicates that the blockchain network was unable to validate the battery pack information and the power tool information; and
wherein the first electronic processor of the power tool is configured to control the operation of the power tool based on the blockchain authentication message by at least one of allowing the power tool to operate in a restricted manner and preventing one or more components of the power tool from operating;
and optionally
wherein the blockchain authentication message indicates that the blockchain network was able to validate the battery pack information and the power tool information; and
wherein the first electronic processor of the power tool is configured to control the operation of the power tool based on the blockchain authentication message by allowing the power tool to operate in an unrestricted manner.
